Europäisches Patentamt

**European Patent Office**

**Office européen des brevets**

(11) Veröffentlichungsnummer: **0 286 713 B1**

(12) **EUROPÄISCHE PATENTSCHRIFT**

(45) Veröffentlichungstag der Patentschrift: **28.10.92**

(51) Int. Cl.⁵: **A45C 11/18**

(21) Anmeldenummer: **87110712.4**

(22) Anmeldetag: **24.07.87**

(54) Vorrichtung zur Aufbewahrung von Kreditkarten und/oder Kontokarten.

(30) Priorität: **13.04.87 CH 1426/87**

(43) Veröffentlichungstag der Anmeldung:
**19.10.88 Patentblatt 88/42**

(45) Bekanntmachung des Hinweises auf die
Patenterteilung:
**28.10.92 Patentblatt 92/44**

(84) Benannte Vertragsstaaten:
**AT BE DE ES FR GB GR IT LU NL SE**

(56) Entgegenhaltungen:
**WO-A-85/02983**
**WO-A-87/01915**
**US-A- 1 658 496**
**US-A- 3 641 690**

(73) Patentinhaber: **Ferob AG**
**Pestalozzistrasse 2**
**CH-9403 Goldach(CH)**

(72) Erfinder: **Oberle, Ferdinand**
**Erlenstrasse 4**
**CH-9400 Rorschacherberg(CH)**

(74) Vertreter: **Römpler, Aldo et al**
**Patentanwälte Georg Römpler und Aldo**
**Römpler Schützengasse 34 Postfach 148**
**CH-9410 Heiden(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die vorliegende Erfindung betrifft eine Vorrichtung zur Aufbewahrung von Kreditkarten und/oder Kontokarten.

Solche Karten sind in ihren Abmessungen weltweit normiert. Sie dienen sowohl für den Verkehr am Bankschalter als auch als bargeldloses Zahlungsmittel für alle möglichen Einkäufe sowie für die verschiedensten Dienstleistungen.
Mit entsprechenden Kontokarten kann man darüberhinaus bei Bank-Automaten Bargeld beziehen. Die Vielzahl von Anbietern von solchen Kreditkarten und/oder Kontokarten bringt es mit sich, dass man meistens eine ganze Anzahl von verschiedenen Karten mit sich führen muss. Die Karten müssen dabei so aufbewahrt werden, dass sie vor Beschädigung geschützt sind, denn meistens weisen sie auf ihrer Rückseite einen maschinell lesbaren Datenträger-Streifen auf. Sie dürfen daher nicht geknickt werden.

Die Kreditkarten und/oder Kontokarten wurden bisher meistens im Portemonnaie oder in der Brieftasche aufbewahrt, wobei diese zu diesem Zweck ein oder mehrere Fächer aufweisen. Nachteilig hierbei ist, dass die Karten nicht zuverlässig genug gegen Umbiegen oder Knicken geschützt sind. Dies trifft insbesondere dann zu, wenn beispielsweise ein Herren-Portemonnaie in die Gesässtasche gesteckt wird.

Aus der US-PS 1'658'496 ist ein Behälter bekannt, welcher an einem Ende offen ist und eine Schublade aufweist, die in ihrer herausgeschobenen Stellung von oben zugänglich ist. Die Schublade ist mit einem Schiebeknopf verbunden, welcher durch einen seitlichen Schlitz aus dem Behälter herausragt. Dank diesem Schiebeknopf kannn die Schublade aus dem Behälter herausgeschoben werden. Für den vorgehend angesprochenen Verwendungszweck ist dieser Behälter jedoch kaum geeignet.

In der US-PS 3'641 690 wird ferner ein Behälter beschrieben, welcher eine Mehrzahl von rahmenartigen Kartenhaltern aufweist. Diese Kartenhalter bestehen aus einem U-förmigen Profil, welches die Ränder der Karte auf drei Seiten umfasst. An der vierten, offenen Seite kann die Karte eingeschoben und wieder entnommen werden. Um zu verhindern, dass die einzelnen Karten unbeabsichtigt herausfallen, sind die Kartenhalter mit einer ihrer der Rahmenöffnung entgegengesetzten Ecken schwenkbar mit dem Behälter verbunden. In ihrer eingeschwenkten Stellung sind die Kartenhalter vollständig im Behälter aufgenommen. In der herausgeschwenkten Stellung eines Kartenhalters ist dessen offene Seite und damit die darin aufgenommene Karte frei zugänglich. Die Kartenhalter sind jeweils mit einer lösbaren Arretierung versehen, bei deren Betätigung der entsprechende Kartenhalter durch Federkraft herausschwenkt. Aufgrund seiner Konstruktion kann dieser Behälter leicht beschädigt werden, insbesondere im Bereich der Schwenkachse der einzelnen Kartenhalter. Ebenfalls konstruktionsbedingt, ist darüberhinaus dessen Handhabung unpraktisch und unbequem.

Die Erfindung bezweckt eine Vorrichtung zur Aufbewahrung von mehreren Kreditkarten und/oder Kontokarten zu schaffen, in welcher die Karten zuverlässig vor Beschädigung geschützt sind und aus welcher die gewünschte Karte mühelos entnommen werden kann.

Die erfindungsgemässe Vorrichtung besteht, wie an sich bekannt, aus einer unbiegsamen und formstabilen Kassette, in welcher eine Mehrzahl von Karten unterbringbar ist, und welche Mittel aufweist, mittels welchen jede Karte aus der Kassette wenigstens teilweise ausstossbar ist. Damit die gewünschte Karte mühelos entnommen werden kann, ist für jede Karte in der Kassette ein Schubfach vorhanden, wobei jedes Schubfach eine Kartenklemme aufweist, die die Karte festhält und so am unbeabsichtigten Herausfallen hindert.

Nachfolgend werden anhand der Zeichnung Ausführungsbeispiele des Erfindungsgegenstandes beschrieben.

Fig. 1     zeigt eine Ansicht eines ersten Ausführungsbeispiels der Kassette von verschiedenen Seiten,

Fig. 2     zeigt die Funktion der Kassette nach Fig. 1, bei eingeschobenem Schubfach, und

Fig. 3     zeigt dieselbe Kassette bei ausgeschobenem Schubfach.

Fig. 4     zeigt ein zweites Ausführungsbei spiel der Kassette,

Fig. 5     zeigt eine Kassette mit Kugelschreiber halterung und Ausweistasche,

Fig. 6     zeigt eine Kassette mit elektronischer Inhaltsanzeige, und

Fig. 7     zeigt schematisch den Aufbau des Anzeigeteiles der Kassette nach Fig. 6.

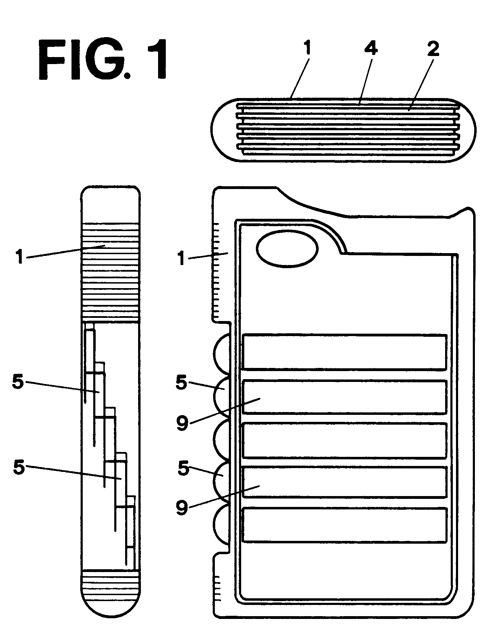

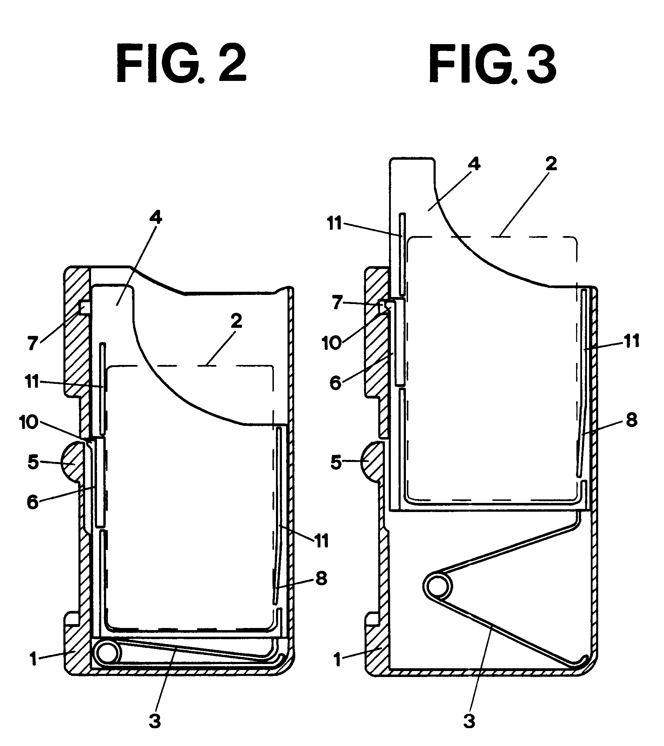

Die in den Figuren 1 bis 3 dargestellte Kassette 1 ist für die Aufnahme von fünf Karten 2 ausgelegt. Zu diesem Zweck enthält die Kassette 1 fünf Schubfächer 4. Jedem Schubfach 4 ist eine Feder 3 und ein Arretiermittel 6 zugeordnet, wobei beim Lösen der Arretierung das Schubfach 4 durch die Kraft der Feder 3 bis zu einer Auszugssperre 7 aus der Kassette 1 ausgeschoben wird. Bei ausgeschobenem Schubfach 4 kann die Kontokarte 2 mühelos entnommen werden. Nach Gebrauch wird die Karte 2 wieder in das Schubfach 4 gelegt und letzteres in die Kassette 1 zurückgeschoben. Zum Lösen der Arretierung 6 ist für jedes Schubfach 4 an der Aussenseite der Kassette 1 ein Knopf 5 vorgesehen.

Das Arretiermittel 6 besteht aus einem, durch eine Aussparung am Schubfach 4 gebildeten Steg, welcher an seinem frei schwingenden Ende eine Nase 10 aufweist, die an einem Anschlag am Kassetten-Gehäuse einrastet. Der Knopf 5 ist in ähnlicher Weise mit dem Kassetten-Gehäuse verbunden. Wird der Knopf 5 gedrückt, rastet die Nase 10 des Arretiermittels 6 aus. Die Feder 3 drückt das Schubfach 4 so weit aus der Kassette 1, bis die Nase 10 an der Auszugssperre 7 wieder einrastet und damit ein Herausfallen des Schubfaches 4 verhindert. Die Feder 3 ist an der Hinterkante des Schubfaches 4 befestigt. Zur sicheren Aufnahme der Karte 2 weist das Schubfach 4 auf seiner Oberfläche eine seitliche Rippe 11 auf. Vorteilhaft ist die Rippe 11 zumindest an einer Stelle, als nach innen gebogener freischwingender Steg ausgeformt, der als Kartenklemme 8 dient und die Karte 2 am Herausfallen aus der Kassette hindert. Für jede Karte 2 ist aussen auf der Kassette 1 eine beschriftbare Fläche 9 vorgesehen, die der Inhaltsangabe dient. Dabei sind die beschriftbaren Flächen 9 jeweils neben einem Knopf 5 angeordnet, so dass beim Drücken des Knopfes 5 die in der entsprechenden Fläche 9 angezeigte Karte ausgestossen wird.

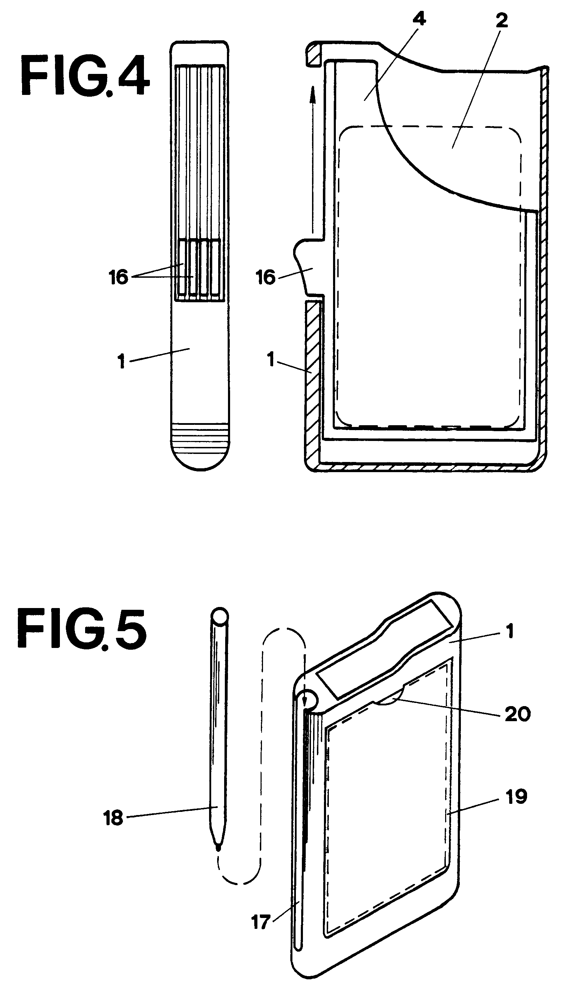

Nach einer anderen Variante gemäss Figur 4 können die Schubfächer 4 von Hand ausschiebbar sein. Hierzu ist jedes Schubfach 4 mit einem seitlich aus der Kassette herausragenden Schiebeknopf 16 versehen.

Wie in Figur 5 gezeigt, kann aussen an der Kassette 1 eine Halterung, beispielsweise eine Hohlnut 17, vorgesehen sein, die zur Aufnahme eines Schreibgerätes, z.B. eines Kugelschreibers 18, dient. Ausserdem kann, ebenfalls aussen an der Kassette 1, eine Tasche 19 angeordnet sein, zur Aufnahme eines Personalausweises. Bei der Tasche 19 handelt es sich vorzugsweise um eine Klarsichttasche.

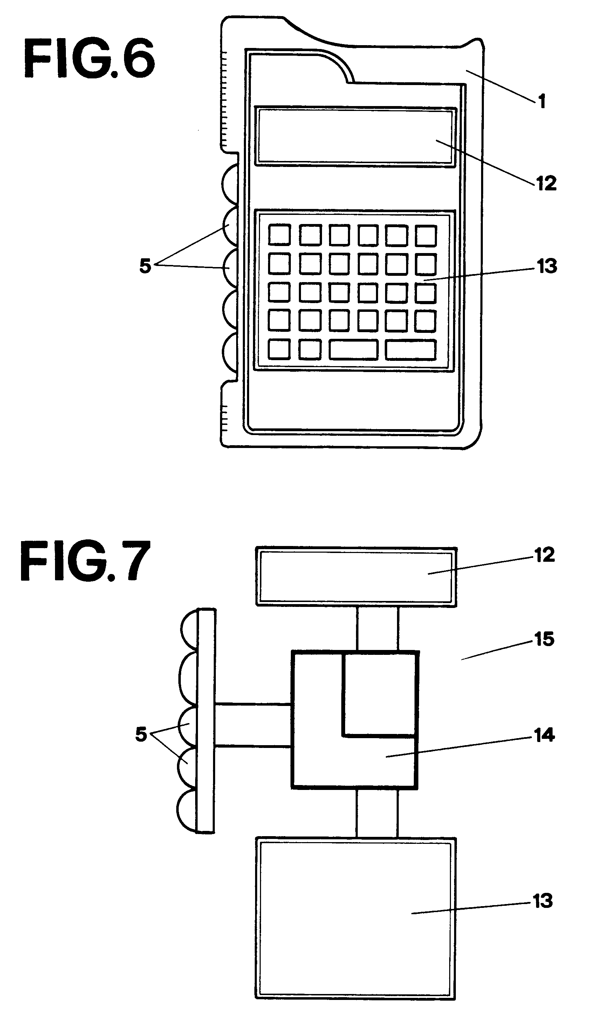

In einer aufwendigeren Ausführung gemäss Figur 6 und 7 ist aussen auf der Kassette 1 eine elektronische Anzeigefläche 12 vorgesehen, auf der der Inhalt der Kassette über eine kleine Alphabet-Tastatur 13 einprogrammierbar ist. Die einzelnen Schubfächer 4 werden dabei auf dieselbe Art wie beim Ausführungsbeispiel nach den Figuren 1 bis 3 ausgeschoben. Auch diese Ausführung weist seitlich Knöpfe 5 auf, welche beispielsweise so geschaltet werden können, dass bei leichtem Knopfdruck bis zu einem ersten Anschlag, auf der Anzeigefläche 12 die im entsprechenden Schubfach 4 enthaltene Karte angezeigt wird und beim ganz Durchdrücken des Knopfes 5 die Arretierung gelöst und das Schubfach 4 mit der Karte ausgestossen wird. Die Alphabet-Tastatur 13 ist über eine Elektronik 14 mit einem Mikroprozessor 15 verbunden, der seinerseits sowohl mit der Anzeigefläche 12 als auch mit den Auslöse-Knöpfen 5 in Verbindung steht. Einzelne Tasten der Alphabet-Tastatur 13 können zusätzlich auch mit Zahlen belegt sein.

Allen denkbaren Ausführungen ist gemeinsam, dass die Kassette 1 unbiegsam und formstabil ist, um die Karten vor Beschädigung zu schützen. Die ganze Vorrichtung kann dabei aus Kunststoff und/oder Metall bestehen.

**Patentansprüche**

1. Vorrichtung zur Aufbewahrung von Kreditkarten und/oder Kontokarten, bestehend aus einer unbiegsamen und formstabilen Kassette (1), in welcher eine Mehrzahl von Karten (2) unterbringbar ist, und welche Mittel aufweist, mittels welchen jede Karte (2) aus der Kassette (1) wenigstens teilweise ausstossbar ist, dadurch gekennzeichnet, dass für jede Karte (2) in der Kassette (1) ein Schubfach (4) vorhanden ist, wobei jedes Schubfach (4) eine Kartenklemme (8) aufweist, die die Karte (2) festhält und so am unbeabsichtigten Herausfallen hindert.

2. Vorrichtung nach Anspruch 1, dadurch gekennzeichnet, dass jedem Schubfach (4) eine Feder (3) und ein Arretiermittel (6) zugeordnet ist, wobei beim Lösen der Arretierung das Schubfach (4) durch die Kraft der Feder (3) bis zu einer Auszugssperre (7) aus der Kassette (1) ausgeschoben wird und dadurch die Karte (2) freigibt, wobei für jede Karte (2), bzw. für jedes Schubfach (4), an der Aussenseite der Kassette (1) ein Knopf (5) vorgesehen ist, mittels welchem die Arretierung der Feder (3) lösbar ist.

3. Vorrichtung nach Anspruch 1, dadurch gekennzeichnet, dass aussen auf der Kassette (1) eine elektronische Anzeigefläche (12) vorgesehen ist, welche mit einer in der Vorrichtung angeordneten, einen Speicher aufweisenden Elektronik (14) verbunden ist, wobei auf der Anzeigefläche (12) der Inhalt der Kassette (1) anzeigbar ist.

4. Vorrichtung nach den Ansprüchen 2 und 3, dadurch gekennzeichnet, dass zum Einprogrammieren des Inhaltes aussen auf der Kassette (1) eine Alphabet-Tastatur (13) vorhanden ist, welche mit der in der Vorrichtung angeordneten Elektronik (14) verbunden ist, die einen Mikroprozessor (15) aufweist, wobei der Mikroprozessor (15) sowohl mit der Anzeigefläche (12) als auch mit den Auslöse-Knöpfen (5) in Verbindung steht, welche hierdurch eine zusätzliche Schalterfunktion haben, indem beim Drücken eines Auslöse-Knopfes (5) über die Elektronik (14) der Inhalt des betreffenden Schubfachs (4) auf der Anzeigefläche zur Anzeige bringbar ist.

5. Vorrichtung nach Anspruch 4, dadurch gekennzeichnet, dass die Auslöse-Knöpfe (5) so geschaltet sind, dass bei leichtem Knopfdruck bis zu einem ersten Anschlag, auf der Anzeigefläche (12) die im entsprechenden Schubfach (4) enthaltene Karte (2) angezeigt wird und beim ganz Durchdrücken des Knopfes (5) die Arretierung gelöst und das Schubfach (4) mit der Karte (2) ausgestossen wird.

## Claims

1. Device for storing credit or account cards, comprising a rigid and not deformable case (1) capable of containing several cards (2), and fitted with a mechanism which enables each card (2) to be at least partially expelled from the case (1), characterized by the fact that the case (1) provides a separate drawer (4) for each card (2) and that each drawer (4) is fitted with a clip (8) which holds the card (2), thereby preventing it from falling out accidentally.

2. Device which complies with claim 1, characterized by the fact that each drawer (4) is controlled by a spring (3) and a stopping mechanism (6), the drawer (4) being expelled from the case (1), as far as a catch (7), thereby freeing the card (2), under the action of a spring (3) once the stopping mechanism (6) has been released, a button (5) having been provided on the outer side of the case (1) for each card (2) or, respectively, for each drawer (4), by which means the stopping mechanism of the spring (3) can be released.

3. Device which complies with claim 1, characterized by the fact that the outside of the case (1) is fitted with an electronic display (12) linked to an electronic system (14) inside the device and featuring a memory, this display (12) making it possible to indicate the contents of the case (1).

4. Device which complies with claims 2 and 3, characterized by the fact that, in order to programme the contents, the outside of the case (1) has been fitted with an alphabetic keyboard (13) linked to the electronic system (14) inside the device and featuring a microprocessor (15), which is connected to the display (12) and the release-buttons (5) as well, which thereby carry out the additional task of switch, for when a release-button (5) is pressed, it activates, via the electronic system (14), the visualization of the contents of the corresponding drawer (4) on the display.

5. Device which complies with claim 4, characterized by the fact that the release-buttons (5) are fitted in such a way that pressing gently on the button until it reaches a first stop activates the visualization on the display (12) of the card (2) contained in the corresponding drawer (4) and that pressing the button (5) as far as it will go releases the stopping mechanism and expels the drawer (4) along with the card (2).

## Revendications

1. Dispositif pour conserver des cartes de crédit ou de compte, comprenant un boîtier (1) rigide et indéformable pouvant contenir plusieurs cartes (2), muni d'un mécanisme à l'aide duquel chaque carte (2) peut être expulsée partiellement au moins du boîtier (1), caractérisé en ce que, pour chaque carte (2) dans le boîtier (1), un compartiment (4) est disponible et que chaque compartiment (4) est équipé d'un clip (8) qui retient la carte (2) pour éviter que celle-ci ne s'échappe accidentellement.

2. Dispositif conforme à la revendication 1, caractérisé en ce que chaque compartiment (4) est commandé par un ressort (3) et un mécanisme d'arrêt (6), le compartiment (4) étant expulsé du boîtier (1) jusqu'à une butée (7) sous l'action du ressort (3), lorsque le mécanisme d'arrêt (6) a été déclenché, libérant ainsi la carte (2), un bouton (5) ayant été prévu sur le côté externe du boîtier (1) pour chaque carte (2) ou plus précisément pour chaque compartiment (4), au moyen duquel le mécanisme d'arrêt du ressort (3) peut être déclenché.

3. Dispositif conforme à la revendication 1, caractérisé en ce que l'extérieur du boîtier est muni d'un afficheur électronique (12) relié à un système électronique (14) dans le dispositif et comportant une mémoire, l'afficheur (12) permettant de visualiser le contenu du boîtier (1).

4. Dispositif conforme aux revendications 2 et 3, caractérisé en ce que, pour programmer le contenu, l'extérieur du boîtier (1) a été muni d'un clavier alphabétique (13) relié au système électronique (14) dans le dispositif et comportant un micro-processeur (15), lequel est relié à l'afficheur (12) et aux boutons de déclenchement (5) qui remplissent de ce fait une fonction supplémentaire de commutateur, l'enfoncement d'un bouton-déclencheur (5) pouvant activer, via le système électronique (14), la visualisation du contenu du compartiment correspondant (4) sur l'afficheur.

5. Dispositif conforme à la revendication 4, caractérisé en ce que les boutons de déclenchement (5) sont montés de telle manière qu'un léger enfoncement du bouton jusqu'à une première butée active la visualisation sur l'afficheur (12) de la carte contenue dans le compartiment (4) correspondant et que l'enfoncement intégral du bouton déclenche le mécanisme d'arrêt et expulse le compartiment (4) et la carte (2).

# FIG. 1

# FIG. 2

# FIG. 3

# FIG.4

16

16

1

1

4

2

# FIG.5

1

20

19

18

17

**FIG.6**

**FIG.7**